# EUROPEAN PATENT SPECIFICATION

(11) **EP 1 804 535 B1**
(45) Date of publication and mention of the grant of the patent: **16.11.2011**
(21) Application number: 05783397.2
(22) Date of filing: 16.09.2005
(51) Int. Cl.: H04W 74/08

(54) **MOBILE STATION, MOBILE COMMUNICATION SYSTEM, AND MOBILE COMMUNICATION METHOD**
MOBILSTATION, MOBILKOMMUNIKATIONSSYSTEM UND MOBILKOMMUNIKATIONSVERFAHREN
STATION MOBILE, SYSTEME DE COMMUNICATION MOBILE ET PROCEDE DE COMMUNICATION MOBILE

(30) Priority: 17.09.2004 JP 2004272467
(43) Date of publication of application: 04.07.2007
(73) Proprietor: NTT DOCOMO, INC., Chiyoda-Ku Tokyo 100-6150 (JP)
(72) Inventor: UMESH, Anil Intellectual Property Dept., Chiyoda-ku, Tokyo 100-6150 (JP); USUDA, Masafumi Intellectual Property Dept., Chiyoda-ku, Tokyo 100-6150 (JP); NAKAMURA, Takehiro Intellectual Property Dept., Chiyoda-ku, Tokyo 100-6150 (JP)
(74) Representative: HOFFMANN EITLE
(86) International application number: PCT/JP2005/017189
(87) International publication number: WO 2006/030913

(56) References cited:
- EP-A- 1 447 943
- JP-A- 2004 248 247
- US-A1- 2003 021 257
- "Cell level rate control and Autonomous transmission with rate ramping" 3GPP TSG-RAN WORKING GROUP 1 RELEASE 6 AD-HOC, XX, XX, 1 January 1900 (1900-01-01), XP008087242
- BIOLOGICAL ABSTRACTS, 20 September 2004, Philadelphia, PA, US; 'E-DPCCH/E-DPDCH time multiplexing.' page; XP002993336

## Description

### Technical Field

The present invention relates to a mobile station, a base station, and a mobile communication method.

### Background Art

In EP 1 447 943 A1, there is described a scheduling method, wherein scheduling grant messages for a user equipment are transmitting beginning at any time slot of a frame for a channel so long as the scheduling grant message does not exceed the frame. The scheduling grant message indicates that the user equipment is approved to transmit on an uplink dedicated channel. The downlink transmission and subsequent uplink dedicated channel transmission have a timing relationship such that no more than one user equipment will begin transmitting on a respective uplink dedicated channel at a time.

The W-CDMA (Wideband-Code Division Multiple Access) is a radio access method for the third generation mobile communication system being standardized by the Third Generation Partnership Project (3GPP) as an international standardization organization.

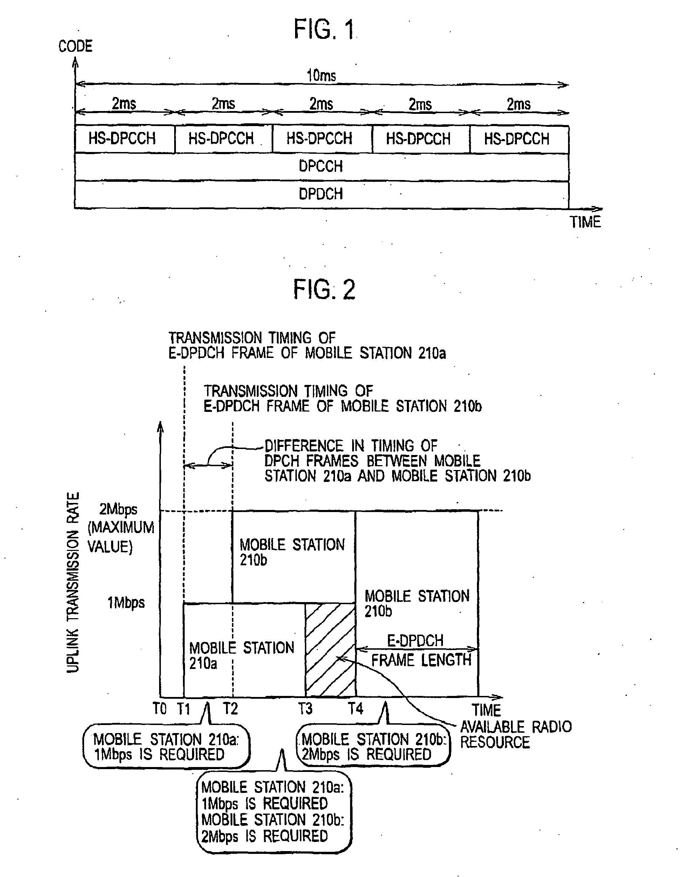

As shown in Fig. 1, physical channels in the W-CDMA uplink for which the specification is already determined include: a dedicated physical data channel (DPDCH: Dedicated Physical Data CHannel) for transmitting user data; a dedicated physical control channel (DPCCH: Dedicated Physical Control CHannel) associated with the dedicated physical data channel; and a dedicated physical control channel (HS-DPCCH: High-Speed-DPCCH) based on a downlink packet high-speed transmission method (HSDPA: High-Speed Downlink Packet Access).

A mobile station transmits the DPDCH and the DPCCH by a frame having a length of 10ms, and transmits the HS-DPCCH by a frame having a length of 2ms. Here, the mobile station performs a code multiplexing for the DPDCH, the DPCCH, and the HS-DPCCH. Hereinafter, the DPCCH and the DPDCH that are collectively handled will be referred to as "DPCH".

In order to improve transmission efficiency in the uplink, the 3GPP has been discussing a uplink high efficient transmission method (EUL: Enhanced Uplink). In the uplink high efficient transmission method (EUL), a dedicated physical data channel (E-DPDCH: Enhanced-DPDCH) for transmitting user data with a high efficiency is transmitted as a new uplink channel (see Non-patent Publication 1 for example).

### (Non-patent Publication 1) 3GPP TR 25.896 V6.0.0 (2004-03)

However, a new problem is caused in which, when a plurality of mobile stations located in a single cell or sector transmit user data by the E-DPDCH at different timings, a radio resource in an uplink cannot be used effectively.

This problem will be described specifically with reference to Fig. 2.

For convenience of description, Fig. 2 shows a case where a cell covered by a base station includes two mobile stations 210a and 210b. The maximum value of an uplink transmission rate that can be instantly allocated to the mobile stations 210a and 210b by the base station is 2Mbps.

At a time T0, in the mobile stations 210a and 210b there is no user data to be requested for transmission. Thus, the base station does not allocate a transmission rate to the mobile stations 210a and 210b.

Thereafter, in the mobile station 210a, user data to be requested for transmission at the top of a DPCH frame of the mobile station 210a (time T1) occurs in a data amount requiring an uplink transmission rate of 1Mbps. Thus, the base station allocates the uplink transmission rate of 1Mbps to the mobile station 210a. At the time T1, the mobile station 210a starts the transmission of user data by using an E-DPDCH.

In the mobile station 210b, user data to be requested for transmission at the top of the DPCH frame of the mobile station 210b (time T2) also occurs in a data amount requiring an uplink transmission rate of 2Mbps.

At the time T2, the transmission of the E-DPDCH frame by the mobile station 210a is not yet completed and the mobile station 210a is allocated with a transmission rate of 1Mbps. Since the maximum value of the uplink transmission rate that can be allocated is 2Mbps, the base station allocates, for the transmission after the time T2, only 1Mbps of an uplink transmission rate to the mobile station 210b. As a result, the mobile station 210b starts the transmission of user data by E-DPDCH at the time T2.

Thereafter, the transmission of the E-DPDCH frame from the mobile station 210a is completed at the time T3. Then, an available space for transmitting user data at 1Mbps is caused in the uplink radio resource.

However, since the transmission of the E-DPDCH frame by the mobile station 210b is on the way, this radio resource having an available space cannot be allocated to the mobile station 210b.

When a time T4 is reached (i.e., at the top of the next frame of the mobile station 210b by the E-DPDCH), the base station allocates the maximum value of 2Mbps of the uplink transmission rate to the mobile station 210b.

As described above, there has been a case where the base station cannot allocate the radio resource having an available space to a mobile station and thus a radio resource of an uplink cannot be effectively used.

### Disclosure of the Invention

The present invention has been made in view of the above. It is an objective of the present invention to provide a mobile station, a mobile communication system, and a mobile communication method, which can efficiently use a radio resource of an uplink, when user data is transmitted based on an uplink high efficient transmission method.

A first aspect of the present invention is summarized as a mobile station comprising, according to independent claim 1, a transmission section configured to transmit uplink data channel frames for transmitting user data based on an EUL method, so that transmission timings of the uplink data channels are synchronized among mobile stations located in a single area.

In the first aspect of the present invention, the transmission section is configured to transmit the uplink data channel frames, with synchronizing the transmission timings of the uplink data channel frames with transmission timings of high-speed uplink control channel frames for transmitting control data based on a downlink packet high-speed transmission method.

In the first aspect of the present invention, the transmission timings of the uplink data channel frames are defined as timings dislocated from a downlink sharing frame timing by a fixed offset.

A second aspect of the present invention is summarized as a mobile communication system comprising according to independent claim 3 a control section configured to control mobile stations located in a single area, so that transmission timings of uplink data channel frames for transmitting user data based on an EUL method are synchronized among the mobile stations.

In the second aspect of the present invention, the control section is configured to control the mobile stations, so as to transmit the uplink data channel frames with synchronizing the transmission timings of the uplink data channel frames with transmission timings of high-speed uplink control channel frames for transmitting control data based on a downlink packet high-speed transmission method.

In the second aspect of the present invention, the control section may be configured to allocate an uplink transmission rate used for the transmission of user data to the mobile station, so that transmission of the uplink data channel frames are started at the transmission timings of the high-speed uplink control channel frames.

A third aspect of the present invention is summarized as a mobile communication method according to independent claim 5, wherein transmission timings of uplink data channel frames for transmitting user data based on an EUL method are synchronized among mobile stations located in a single area, and wherein uplink data channel frames are transmitted while synchronizing the transmission timings of the uplink data channel frames with transmission timings of high-speed uplink control channel frames for transmitting control data based on a downlink packet high-speed transmission method.

### Brief Description of the Drawings

Fig. 1 is a diagram for illustrating uplink channels used in a conventional mobile communication system.
Fig. 2 is a diagram for explaining a problem in a conventional mobile communication system.
Fig. 3 is a diagram for illustrating the configuration of a mobile communication system according to a first embodiment of the present invention.
Figs. 4(a) to 4(c) are diagrams for illustrating cells and sectors in a mobile communication system according to the first embodiment of the present invention.
Figs. 5(a) to 5(b) are diagrams for illustrating physical channels in an uplink used in the mobile communication system used according to the first embodiment of the present invention.
Fig. 6 is a block diagram for illustrating the configuration of a base station according to the first embodiment of the present invention.
Fig. 7 is a diagram for illustrating transmission timings of HS-DPCCH frames and DPCH frames used in the mobile communication system according to the first embodiment of the present invention.
Fig. 8 is a diagram for explaining a transmission request in a mobile communication system according to the first embodiment of the present invention.
Fig. 9 is a diagram for explaining the allocation of uplink transmission rates in a mobile communication system according to the first embodiment of the present invention.
Fig. 10 is a block diagram or illustrating a mobile station according to the first embodiment of the present invention.
Fig. 11 is a sequence diagram for illustrating a procedure of a mobile communication method according to the first embodiment of the present invention.
Fig. 12 is a diagram for illustrating transmission timings of downlink sharing frames used in the mobile communication system according to a second embodiment of the present invention.

### Best Mode for Carrying out the Invention

### (Configuration of a mobile communication system according to a first embodiment of the present invention)

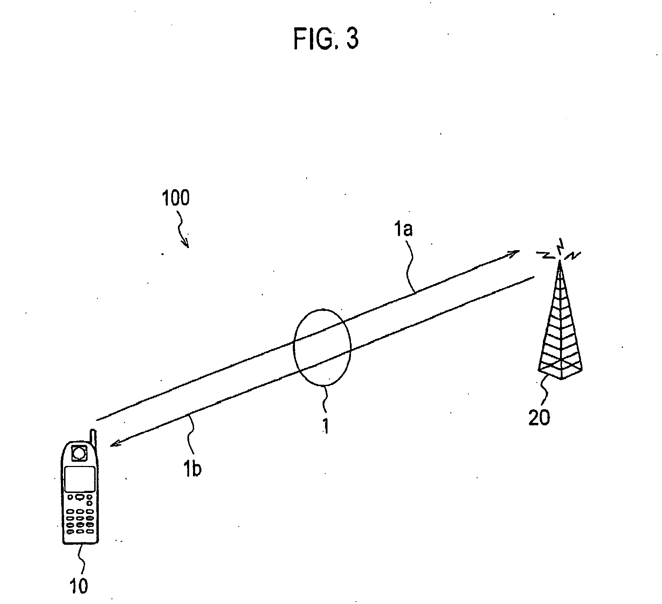

As shown in Fig. 3, a mobile communication system 100 according to a first embodiment of the present invention includes a mobile station 10 and a base station 20. The mobile communication system 100 uses a cellular system that covers a service area in which the mobile communication system 100 provides a mobile communication service.

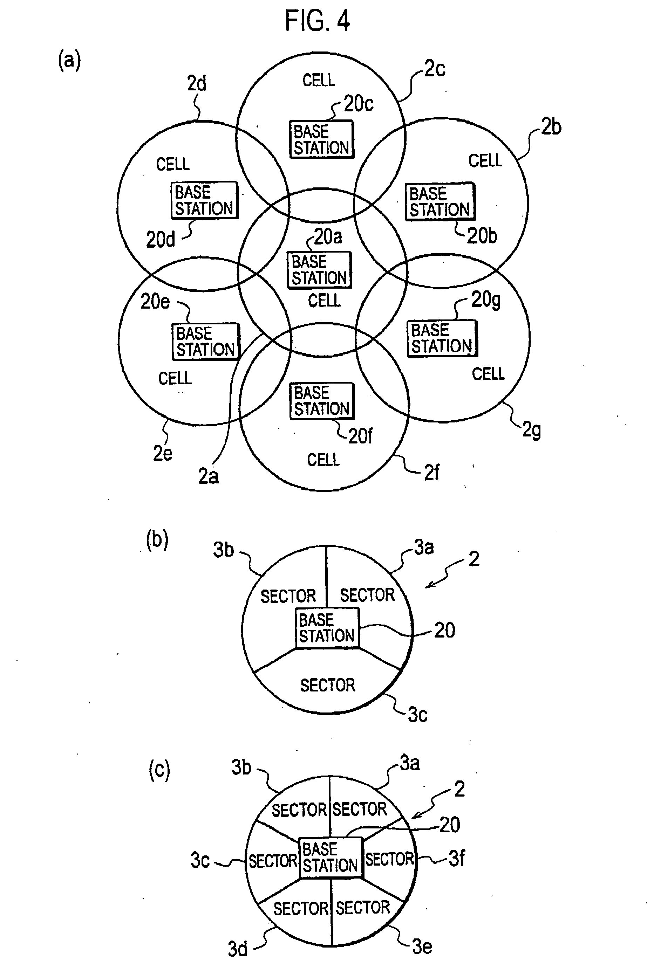

Specifically, as shown in Fig. 4(a), the service area of the mobile communication system 100 is divided to a plurality of areas called cells. For each of cells 2a to 2g, base stations 20a to 20g for covering the cells 2a to 2g are placed, respectively. The base stations 20a to 20g have communication with the mobile stations 10 located in the cells 2a to 2g.

As shown in Fig. 4(a) and Fig. 4(c), one cell 2 covered by one base station 20 also can be divided to a plurality of areas called as sectors.

There are a 3-sector configuration as shown in Fig. 4(b) in which one cell 2 is divided to three sectors 3a to 3c, and a 6-sector configuration as shown in Fig. 4(c) in which one cell 2 is divided to six sectors 3a to 3f. In this case, the base station 20 has sector antennas for the respective sectors 3a to 3f, so as to have communication with the mobile stations 10 located in the respective sectors 3a to 3f.

As shown in Fig. 3, a radio communication link 1 is established between the mobile station 10 and the base station 20. The radio communication link 1 includes an uplink 1a for transmitting data from the mobile station 10 to the base station 20, and a downlink 1b for transmitting data from the base station 20 to the mobile station 10.

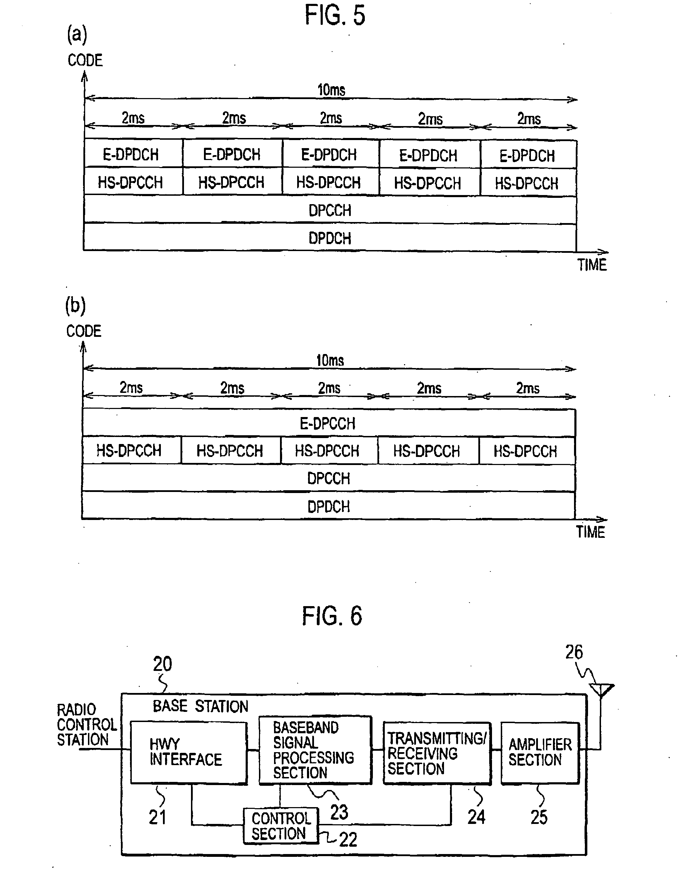

Fig. 5 illustrates a frame format and a code multiplexing configuration of a plurality of physical channels to be transmitted from the mobile station 10 to the base station 20 via the uplink 1a. In Fig. 5, the horizontal axis represents time and the vertical axis represents a code (spread code).

An E-DPDCH (Enhanced-Dedicated Physical Data Channel) is a high efficient uplink data channel through which user data is transmitted with a high efficiency based on the uplink high efficient transmission method (EUL: Enhanced Uplink).

A frame of the E-DPDCH (hereinafter referred to as "E-DPDCH frame") includes the one having a frame length of 2ms shown in Fig. 5(a) and the one having a frame length of 10ms shown in Fig. 5(b). The E-DPDCH frame having a frame length of 2ms is time-multiplexed.

An HS-DPCCH (High Speed-Dedicated Physical Control Channel) is a high-speed uplink control channel through which control data is transmitted based on the downlink packet high-speed transmission method (HSDPA: High-Speed Downlink Packet Access). A frame of the HS-DPCCH (hereinafter referred to as "HS-DPCCH frame") has a frame length of 2ms.

The E-DPDCH and the HS-DPCCH are dedicated physical channels which is dedicated to the respective mobile stations 10.

A DPDCH is a dedicated physical data channel through which user data is transmitted. A DPCCH is a dedicated physical control channel associated with the DPDCH. The DPDCH and the DPCCH have a frame length of 10ms.

The mobile station 10 performs a code multiplexing for the E-DPDCH, the HS-DPCCH, the DPCCH, and the DPDCH by four different codes (spread codes), so as to transmit the data.

Next, the configuration of the base station 20 will be described in detail. The base station 20 includes, as shown in Fig. 6, a HWY interface 21, a control section 22, a baseband signal processing section 23, a transmitting/receiving section 24, an amplifier section 25, and a transmitting/receiving antenna 26.

The HWY interface 21 is an interface to a radio control station. The HWY interface 21 is configured to transmit and receive control data and user data to and from a radio control station.

The baseband signal processing section 23 is configured to perform a signal processing for user data and control data to be transmitted to mobile station 10, or a signal processing for a baseband signal received from the mobile station 10. The baseband signal processing section 23 performs a signal processing (e.g., error-correcting coding, data modulation, spreading, despreading, RAKE synthesis, error-correcting decoding).

The transmitting/receiving section 24 is configured to transmit and receive user data and control data to and from the mobile station 10 by radio. The transmitting/receiving section 24 converts a baseband signal to be transmitted, to a signal having a radio frequency band. The transmitting/receiving section 24 also converts a received signal to a baseband signal by detection, filtering, and the like.

The amplifier section 25 amplifies a signal, so as to transmit and receive, via the transmitting/receiving antenna 26, the signal to and from the mobile station 10.

The control section 22 is configured to control mobile stations 10 located in a single area, so that transmission timings of high efficient uplink data channel frames (E-DPDCH frames) for transmitting user data based on the uplink high efficient transmission method are synchronized among the mobile stations 10.

Areas include the cells 2a to 2g as shown in Fig. 4(a) and the sectors 3a to 3f as shown in Fig. 4(b) and Fig. 4(c).

When a service area is divided to a plurality of cells 2a to 2g, the control section 22 controls so that the transmission timings are synchronized among the mobile stations 10 located in the cell covered by a base station 20.

When a cell is further divided to a plurality of sectors 3a to 3f, the control section 22 controls so that the transmission timings are synchronized among the mobile stations 10 located in the respective sector covered by a base station 20.

Specifically, the control section 22 can control the mobile stations 10 located in a cell or a sector, so as to perform transmission, with synchronizing transmission timings of the high efficient uplink data channel frame (E-DPDCH frame) with transmission timings of the high-speed uplink control channel frames (HS-DPCCH frames) for transmitting control data based on the downlink packet high-speed transmission method.

The control section 22 instructs the mobile stations 10 to transmit the E-DPDCH frames, with synchronizing the transmission timings of the E-DPDCH frames with the transmission timings of the HS-DPCCH frames.

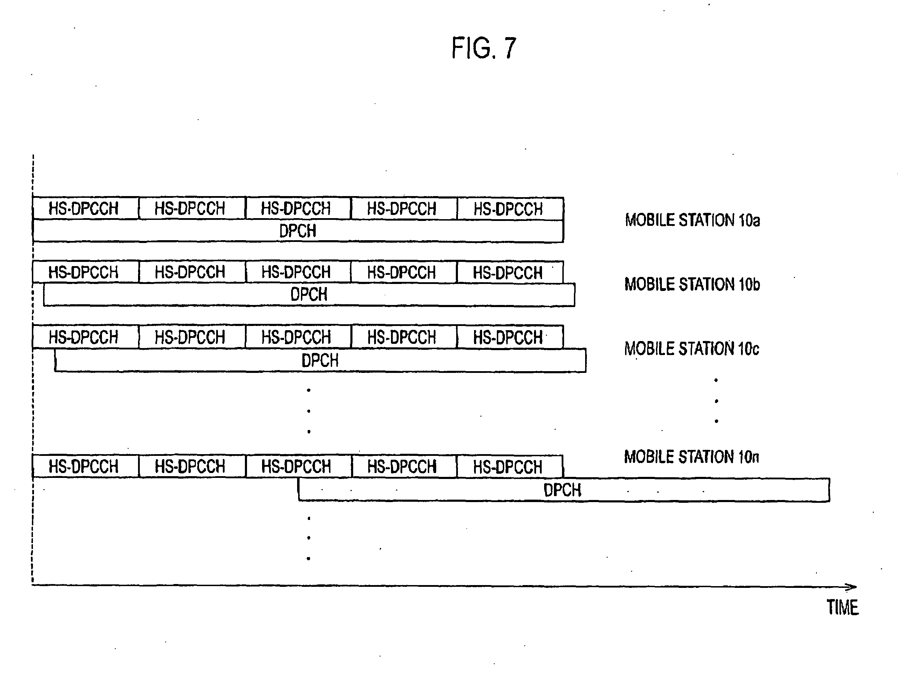

As shown in Fig. 7, the transmission timings of theHS-DPCCH frames are synchronized among a plurality of mobile stations 10a to 10n located in an identical cell or sector. Specifically, transmission timings of the HS-DPCCH frames are aligned among the plurality of mobile station 10a to 10n.

On the other hand, the transmission timings of DPCH (DPCCH and DPDCH) frames are offset between each of the plurality of mobile stations 10a to 10n located in an identical cell or sector, by an amount of 256 chips. It is noted that 38400 chips correspond to 10ms.

Thus, the control section 22 can control the mobile stations 10 located in the cell or sector to synchronize the transmission timing of the E-DPDCH frames with the transmission timings of the HS-DPCCH frames, so that the transmission timings of E-DPDCH frames can be synchronized among the mobile stations 10 located in the cell or sector.

On the other hand, when the transmission timing of the E-DPDCH frames are synchronized with the transmission timings of the DPCH frames, the situation that the transmission timings of the E-DPDCH frames are not synchronized among the mobile stations 10 located in the cell or sector occurs, due to the transmission timings of the DPCH frames.

The control section 22 can allocate, based on requests to transmit user data (hereinafter referred to as "transmission request") from the mobile stations 10, uplink transmission rates used for the transmission of user data to the mobile stations 10, so as to control transmission timings of the mobile stations. The term "uplink transmission rate" herein means a transmission rate of uplink user data by an uplink channel.

Specifically, the control section 22 allocates an uplink transmission rate used for the transmission of user data to the mobile station 10, so that the transmission of a high efficient uplink data channel frame (E-DPDCH frame) is started at a transmission timing of a high-speed uplink control channel frame (HS-DPCCH frame).

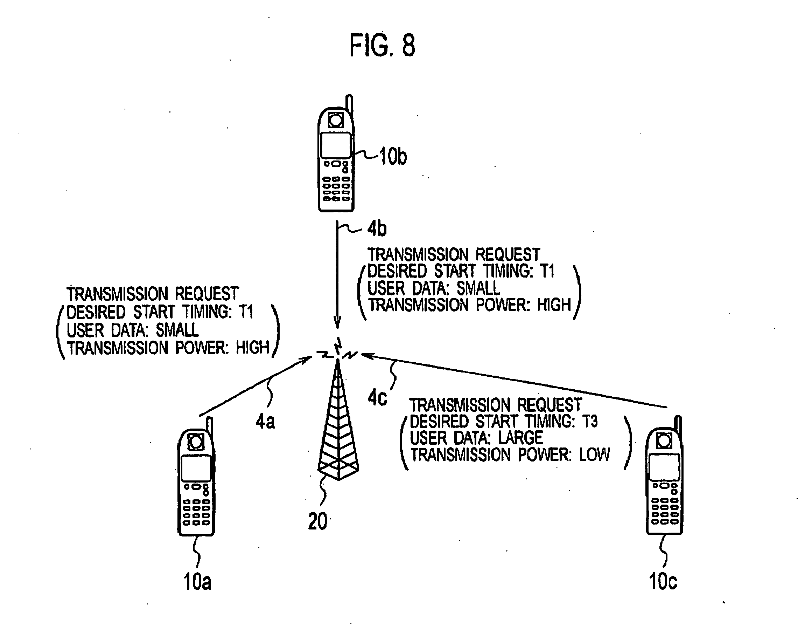

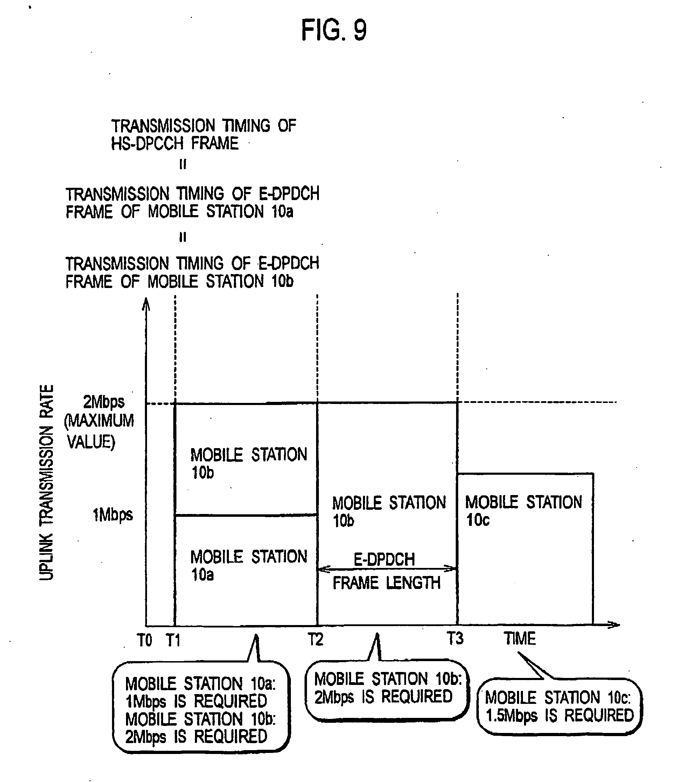

Hereinafter, with reference to Fig. 8 and Fig. 9, a control in response to a transmission request in a mobile communication system according to this embodiment will be specifically described. The term "transmission request" herein means a request to transmit user data retained by the mobile station 10 to the base station 20.

The control section 22 allocates uplink transmission rates to all mobile stations located in a cell or a sector, in accordance with the statuses of the mobile stations. Fig. 8 and Fig. 9 illustrate a case where the base station 20 covers the cell 2 where a plurality of mobile stations 10a, 10b, and 10c are located.

The control section 22 allocates uplink transmission rates to the respective mobile stations 10a to 10c, based on parameters (e.g., amounts of user data which is accumulated in transmission buffers of the mobile stations 10a to 10c and is to be transmitted by the mobile stations 10a to 10c, desired start timings at which the transmission of the user data is desirably started, transmission power of the mobile stations 10a to 10c).

The control section 22 allocates uplink transmission rates, so that the total of uplink transmission rates allocated to the respective mobile stations 10a to 10c at an identical time is equal to or lower than the maximum value of uplink transmission rates for user data in the E-DPDCH that can be allocated by the base station 20 to the mobile stations 10a to 10c located in the cell 2.

Specifically, the control section 22 performs scheduling by allocating uplink transmission rates that can be simultaneously received by the base station 20 to the mobile stations 10a to 10c for every E-OPDCH frame. The control section 22 performs the scheduling by instantaneously calculating such uplink transmission rates.

Based on the allocated uplink transmission rates, the control section 22 allocates radio resources in the uplinks to the respective mobile stations 10a to 10c. The control section 22 notifies the mobile stations 10a to 10c of the allocated uplink transmission rates and radio resources, so as to control the mobile stations 10a to 10c**.** The control section 22 generates control data including the allocated uplink transmission rates and radio resource, so as to input the control data to the baseband signal processing section 23.

For example, as shown in Fig. 8, the control section 22 receives from the mobile station 10a a transmission request 4a specifying that a desired start timing is "time T1", a user data amount is "small amount", and a transmission power is "high".

The control section 22 also receives from the mobile station 10b a transmission request 4b specifying that a desired start timing is "time T1", a user data amount is "large amount", and a transmission power is "high".

The control section 22 also receives from a mobile station 10c a transmission request 4c specifying that a desired start timing is "time T3", a user data amount is "large amount", and a transmission power is "low".

Based on the transmission requests 4a to 4c from the mobile stations 10a to 10c as described above, the control section 22 detects that the mobile stations 10a to 10c retain user data desired to be transmitted via E-DPDCH, the data amount thereof, a desired start timing, and the like.

The transmission requests 4a to 4c are transmitted, for example, by a frame prior to the desired start timing by using any of the uplink channels.

Based on the transmission requests 4a to 4c from the mobile stations 10a to 10c, the control section 22 allocates, as shown in Fig. 9, uplink transmission rates used for the transmission of the user data to the mobile stations 10a to 10c.

In the example of Fig. 9, the maximum uplink transmission rate value that can be allocated by the base station 20 to the mobile stations 10a to 10c is 2Mbps. In the mobile stations 10a to 10c located in the cell 2, at a time T0, there is no user data to be requested for transmission. Thus, the control section 22 does not allocate a transmission rate to the mobile stations 10a to 10c.

Specifically, since there is no user data to be transmitted at the time T0, all of the mobile stations 10a to 10c are allocated with 0bps as an uplink transmission rate.

The control section 22 determines that the mobile station 10a has desired transmission user data requiring an uplink transmission rate of 1Mbps, at a time T1 which is the top of a HS-DPCCH frame, based on the transmission request 4a from the mobile station 10a.

The control section 22 also determines that the mobile station 10b has desired transmission user data requiring an uplink transmission rate of 2Mbps, at a time T1 which is the top of a HS-DPCCH frame, based on the transmission request 4b from the mobile station 10b.

The control section 22 allocates 1Mbps, as an uplink transmission rate used for the transmission of the user data, to the mobile station 10a, so that the transmission of the E-DPDCH frame of the mobile station 10a is started at the time T1 which is a transmission timing of the HS-DPCCH frame.

Although the control section 22 also has detected that the mobile station 10b has desired transmission of user data for requiring an uplink transmission rate of 2Mbps, the maximum uplink transmission rate value that can be allocated by the base station 20 is 2Mbps and an uplink transmission rate of 1Mbps has been already allocated to the mobile station 10a. Thus, the control section 22 allocates only 1Mbps, as an uplink transmission rate used for the transmission of the user data, to the mobile station 10b, so that the transmission of the E-DPDCH frame of the mobile station 10b is started at the time T1 which is a transmission timing of the HS-DPCCH frame.

The control section 22 instantaneously allocates and notifies, in response to a transmission request, an uplink transmission rate to the mobile stations 10a and 10b. Then, the mobile stations 10a and 10b set the user data to the E-DPDCH frame at the time T1 that is a transmission timing of a HS-DPCCH frame and a transmission timing of an E-DPDCH frame of the mobile stations 10a and 10b, so as to start the transmission of the user data.

In this manner, it is possible to synchronize the transmission timings of the E-DPDCH frames of the mobile stations 10a and 10b with the transmission timings of the HS-DPCCH frames.

When the time T2 is reached, the transmission of the user data with using the E-DPDCH frame by the mobile station 10a is completed. As a result, an uplink radio resource through which user data can be transmitted at 1Mbps is available.

Since the transmission timings of an E-DPDCH frames are synchronized between the mobile station 10a and the mobile station 10b, the control section 22 allocates, in order to allow the mobile station 10b at the time T2 to immediately use the uplink transmission rate of 2Mbps, an uplink transmission rate used for the transmission of user data of 2Mbps started from the time T2 which is a subsequent transmission timing of an E-DPDCH frame following the time T1, thus resulting in allocating the available uplink resource to the mobile station 10b.

The control section 22 notifies the newly allocated uplink transmission rate to the mobile station 10b. Then, the mobile station 10b changes the uplink transmission rate of the user data at the time T2 which is the subsequent transmission timing of E-DPDCH frames.

When the time T3 is reached thereafter, the transmission of the user data with using an E-DPDCH frame by the mobile station 10b is completed. As a result, an uplink radio resource through which user data can be transmitted at 2Mbps is available.

When the time T3 which is the top of the HS-DPCCH frame is reached, the control section 22 determines, based on the transmission request 4c from the mobile station 10c, that the mobile station 10c has desired the transmission of user data for requiring an uplink transmission rate of 1.5Mbps.

The control section 22 allocates 1.5Mbps, as an uplink transmission rate of used for the transmission of the user data, to the mobile station 10c, so that the transmission of the E-DPDCH frame of the mobile station 10c is started at the time T3 which is a transmission timing of HS-DPCCH frames.

Based on the transmission request, the control section 22 instantaneously allocates and notifies an uplink transmission rate to the mobile station 10c. Then, the mobile station 10c sets the user data to the E-DPDCH frame, so as to start the transmission of the user data at the time T3 that is a transmission timing of a HS-DPCCH frame and a transmission timing of an E-DPDCH frame of the mobile station 10c.

In this manner, it is possible to synchronize the transmission timings of the E-DPDCH frames of the mobile station with the transmission timings of the HS-DPCCH frames.

It is noted that the control section 22 is configured to provide other call controls such as a calling control, a called control, and the like.

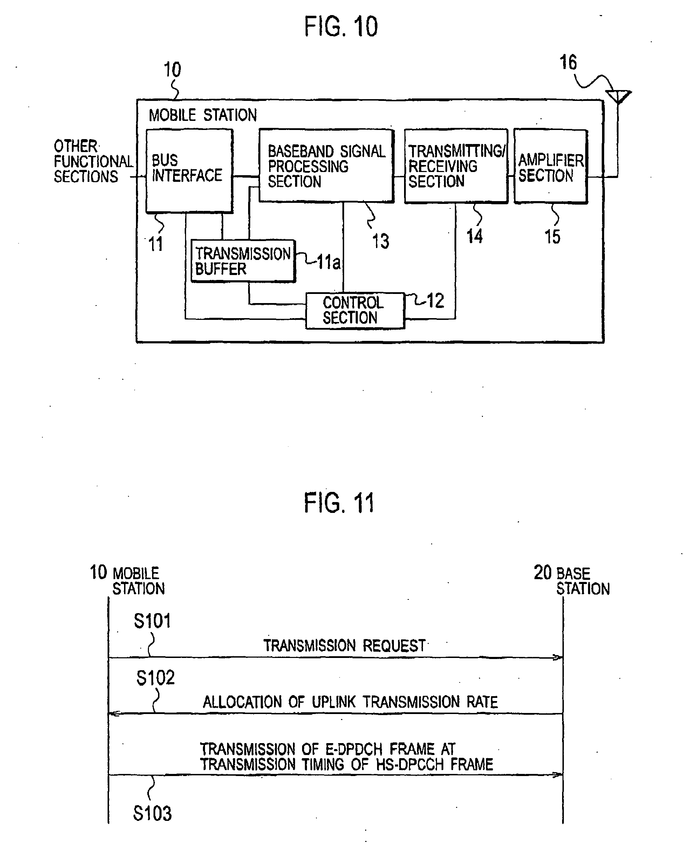

As shown in Fig. 10, the mobile station 10 includes: a bus interface 11, a control section 12, a baseband signal processing section 13, a transmitting/receiving section 14, a amplifier section 15, a transmitting/receiving antenna 16, and a transmission buffer 11a. It is noted that Fig. 10 illustrates only a radio communication function part of the mobile station 10.

The bus interface 11 is an interface to other functional sections. The bus interface 11 is configured to obtain user data and the like from other functional sections (e.g., input section, external device), so as to store the user data in the transmission buffer 11a. The bus interface 11 is also sconfigured to output user data received by the mobile station 10 to other functional sections (e.g., output section, external device).

The transmission buffer 11a is configured to accumulate user data transmitted from the mobile station 10.

The baseband signal processing section 13 is configured to perform signal processing for user data and control data to be transmitted to the base station 20, and for a baseband signal received from the base station 20. The baseband signal processing section 13 performs, for example, signal processing (e.g., error-correcting coding, data modulation, spreading, despreading, RAKE synthesis, error-correcting decoding).

The transmitting/receiving section 14 is configured to transmit and receive user data and control data to and from the base station 20 by a radio. The transmitting/receiving section 14 converts baseband signal to be transmitted, to a signal having a radio frequency band. The transmitting/receiving section 14 converts a received signal to a baseband signal by detection, filtering, and the like.

The amplifier section 15 is configured to amplify a signal, so as to transmit and receive, via the transmitting/receiving antenna 16, a signal to and from the base station 20.

The transmitting/receiving section 14 functions as a transmission section configured to transmit the E-DPDCH frames, so that the transmission timings of the high efficient uplink data channel frames (E-DPDCH frames) for transmitting user data based on the uplink high efficient transmission method are synchronized among the mobile stations 10 located in an identical area.

When a service area is divided to a plurality of cells 2a to 2g, the transmitting/receiving section 14 transmits the E-DPDCH frame, so that the transmission timings are synchronized among the mobile stations 10 located in a cell covered by the base station 20.

When a cell is further divided to a plurality of sectors 3a to 3f, the transmitting/receiving section 14 transmits the E-DPDCH frame, so that the transmission timings are synchronized among the the mobile stations 10 located in each sector covered by the base station 20.

Specifically, the transmitting/receiving section 14 can perform transmission, with synchronizing the transmission timings of the high efficient uplink data channel frames (E-DPDCH frames) with transmission timings of the high-speed uplink control channel frames (HS-DPCCH frames) for transmitting control data based on the downlink packet high-speed transmission method.

As shown in Fig. 7, the transmission timings of the HS-DPCCH frames are synchronized among a plurality of mobile stations 10a to 10n located in a single cell or sector.

Thus, the transmitting/receiving section 14 can perform transmission with synchronizing the transmission timings of the E-DPDCH frames with the transmission timings the HS-DPCCH frames, so that the transmission of the E-DPDCH frames can be synchronized among the mobile stations 10 located in a single cell or sector.

At a frame prior to a desired start timing, the control section 12 requests the base station 20 to transmit user data. With reference to Fig. 8 and Fig. 9, processing performed by the transmitting/receiving section 14 and the control section 12 will be described as follows.

The control section 12 requests transmission of user data to the base station 20, based on an amount of user data accumulated in the transmission buffer 11a. The control section 12 generates a transmission request including information required for the base station 20 to determine an uplink transmission rate (e.g., amount of user data, desired start timing).

The control section 12 inputs to the baseband signal processing section 13 the transmission request as control data. The control section 12 generates the transmission request prior to the desired start timing, so as to cause the transmitting/receiving section 14 to transmit the generated transmission request to the base station 20.

In response to the transmission request, the control section 12 is notified of an uplink transmission rate and the radio resource of the uplink allocated from the base station 20. The baseband signal processing section 13 decodes control data received from the base station 20, so as to input the control data to the control section 12. In response to the transmitted transmission request, the control section 12 controls the transmitting/receiving section 14, so as to transmit user data by the E-DPDCH, based on the uplink transmission rate instantaneously allocated by the base station 20.

As a result, the transmitting/receiving section 14 sets the user data to the E-DPDCH frame, as as to start the transmission of the user data at a transmission timing that is a transmission timing of the HS-DPCCH frame and a transmission timing of the E-DPDCH frame of the mobile station 10.

For example, as shown in Fig. 9, the mobile stations 10a to 10c can transmit E-DPDCH frames at the time T1, T2, or T3 which is a transmission timing of a HS-DPCCH frame.

The transmitting/receiving section 14 of the mobile station 10a transmits, based on the control by the control section 12, the E-DPDCH frame including user data at the time T1 at the allocated uplink transmission rate of 1Mbps.

The transmitting/receiving section 14 of the mobile station 10b transmits, based on the control by the control section 12, the E-DPDCH frame including user data at the allocated uplink transmission rate of 1Mbps and at the time T1.

Prior to the time T2, the control section 12 also instructs the transmitting/receiving section 14 to change the uplink transmission rate to 2Mbps. Based on this instruction, the transmitting/receiving section 14 changes, after the time T2, the uplink transmission rate to 2Mbps, so as to transmit the user data.

After the time T3, the transmitting/receiving section 14 of the mobile station 10c transmits, in accordance with the control by the control section 12, the E-DPDCH frame including the user data at the allocated uplink transmission rate of 1.5Mbps. It is noted that, the control section 12 also provides various other controls including call controls such as a calling control, a called control, and the like.

### (Operation of mobile communication system according to Embodiment 1 of the present invention)

With reference to Fig. 11, a procedure of a mobile communication method using the mobile communication system 100 according to this embodiment will be described.

In Step S101, when user data to be transmitted occurs, the mobile station 10 transmits a transmission request of the user data to the base station 20, prior to a desired start timing.

In Step S102, the base station 20 instantaneously allocates, in response to the transmission request, an uplink transmission rate used for the transmission of the user data to the mobile station 10, and notifies the mobile station 10 of the uplink transmission rate.

In Step S103, the mobile station 10 uses the uplink transmission rate instantaneously allocated in response to the transmission request, so as to transmit the user data with synchronizing the transmission timings of the E-DPDCH frames with the transmission timings of the HS-DPCCH frames.

### (Action and effect by mobile communication system according to Embodiment 1 of the present invention)

According to the mobile communication system 100, the mobile station 10, the base station 20, and the mobile communication method (hereinafter referred to as mobile communication system, etc.) as described above, it is possible to synchronize the transmission timings of the E-DPDCH frames among the mobile stations 10 located in a single cell or sector. Thus, it is possible to utilize the radio resource of the uplink 1a efficiently, in the transmission of user data based on the uplink high efficient transmission method (EUL).

In the mobile communication system and the like as described above, the control section 22 of the base station 20 can control the mobile stations 10 to perform transmission, so that the transmission timings of the E-DPDCH frames are synchronized with the transmission timings of the HS-DPCCH frames. Thus, the transmitting/receiving section 14 of the mobile station 10 can perform transmission, with synchronizing the transmission timings of the E-DPDCH frames with the transmission timings of the HS-DPCCH frames.

According to the above configuration, if the base station 20 controls the mobile stations 10 to synchronize the transmission timings of the E-DPDCH frames with the transmission timings of the HS-DPCCH frames which are synchronized among the mobile stations 10 located in a single cell or sector, and the mobile stations 10 synchronize the transmission timings in accordance with the control, so that it is possible to the transmission timings of the E-DPDCH frames among the mobile stations 10 located in a single cell or sector. Therefore, it is possible to realize an efficient use of the radio resource of the uplink 1a.

Further, in the mobile communication system and the like, the control section 22 of the base station 20 can allocate an uplink transmission rate used for the transmission of user data to the mobile station 10, so that the transmission of an E-DPDCH frames are started at a transmission timings of the HS-DPCCH frames. By the allocation of an uplink transmission rate as described above, the base station 20 can synchronized the transmission timings of the E-DPDCH frames with the transmission timings of the HS-DPCCH frames transmitted by the mobile stations 10.

As described above, in the mobile communication system 10, by unifying the transmission timings of the E-DPDCH frames of all mobile stations 10 located in a identical sell or sector, that is, by synchronizing the transmission timings of the E-DPDCH frames among the mobile stations 10 located in a identical sell or sector, it is possible to avoid waste of available radio resources due to the situation that the transmission timings of the E-DPDCH frames are different among mobile stations located in a single cell or sector. Thus, it is possible to efficiently allocate uplink transmission rates to mobile stations based on the high efficient transmission method (EUL), and to efficiently use the radio resource.

Thus, it is possible to improve communication performance (e.g., communication capacity or quality) of the mobile communication system 100. The mobile communication method as described above is a technique that is particularly effective to the W-CDMA or the CDMA 2000 as the third generation mobile communication system.

### (Mobile communication system according to Embodiment 2 of the present invention)

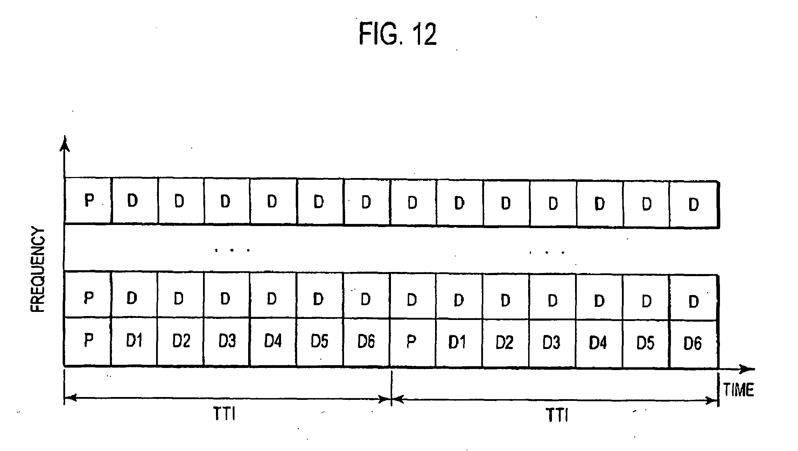

With reference to Fig. 12, a mobile communication system according to a second embodiment of the present invention will be described.

In the mobile communication system according to the second embodiment, the transmitting/receiving section 14 of the mobile station 10 is configured to transmit the high efficiency uplink data channel frames for transmitting user data based on the uplink high efficient transmission method, so that the transmission timings of the high efficiency uplink data channel frames are synchronized among mobile stations located in a single area.

In the second embodiment, the "Uplink Scheduled Channel: Shared Data Channel or Shared Control Channel" specified in the "3GPP TSG-RAN R1-050467/Rl-050591" is configured to be used as the high efficiency uplink data channel for transmitting user data based on the uplink high efficient transmission method.

Specifically, the transmitting/receiving section 14 of the mobile station 10 perform transmission, with synchronizing the transmission timings of the high efficiency uplink data channel (Uplink Scheduled Channel) frames with the transmission timings of the high-speed uplink control channel frames for transmitting control data based on the downlink packet high-speed transmission method.

In the second embodiment, the "downlink sharing frame timing" specified in the "3GPP TSG-RAN R1-050590" is configured to be used as the high-speed uplink control channel frames for transmitting control data based on the downlink packet high-speed transmission method.

The "downlink sharing frame timing" is shown in Fig. 12. In the example of Fig. 12, "TTI" represents a time of about 0.5ms, "P" represents a common pilot symbol, and "D" represents Shared Data Channel Symbol, for example.

Transmission timings of the Uplink Scheduled Channels are synchronized among mobile stations located in a single cell/sector (area). The transmission timings are defined, for example, as timings dislocated from the "downlink sharing frame timing" shown in Fig. 12, by a fixed offset.

In the mobile communication system according to the second embodiment, the control section 22 of the base station 20 controls mobile stations located in a single area, so that the transmission timings of the high efficiency uplink data channel frames for transmitting user data based on the uplink high efficient transmission method among the mobile stations.

As described above, the present invention has been described in detail by illustrative embodiments. However, it is clear for those skilled in the art that the present invention is not limited to the illustrative embodiments described in this application. The apparatus of the present invention can be changed or modified without departing the intention and scope of the present invention defined by the claims. Thus, the description of this application is for an illustrative description and does not limit in any way the present invention.

### Industrial Applicability

As described above, the present invention can provide a mobile station, a base station, and a mobile communication method, wherein an uplink radio resource can be efficiently used to transmit user data based on the uplink high efficient transmission method.

## Claims

1. A mobile station (10a, 10b, 10c), comprising:
a transmission section (14) configured to transmit uplink data channel frames for transmitting user data based on an EUL method, so that transmission timings of the uplink data channel frames are synchronized among mobile stations located in a single area;
***characterized in that***
the transmission section (14) is configured to transmit the uplink data channel frames, with synchronizing the transmission timings of the uplink data channel frames with transmission timings of high-speed uplink control channel frames for transmitting control data based on a downlink packet high-speed transmission method.

2. The mobile station according to claim 1, wherein the transmission timings of the uplink data channel frames are defined as timings dislocated from a downlink sharing frame timing by a fixed offset.

3. A mobile communication system, comprising:
a control section (22) configured to control mobile stations (10a, 10b, 10c) located in a single area, so that transmission timings of uplink data channel frames for transmitting user data based on an EUL method are synchronized among the mobile stations (10a, 10b, 10c);
***characterized in that***
the control section (22) is configured to control the mobile stations (10a, 10b, 10c), so as to transmit the uplink data channel frames with synchronizing the transmission timings of the uplink data channel frames with transmission timings of high-speed uplink control channel frames for transmitting control data based on a downlink packet high-speed transmission method.

4. The mobile communication system according to claim 3, wherein the control section (22) is configured to allocate an uplink transmission rate used for the transmission of the user data to the mobile station (10a, 10b, 10c), so that transmission of the uplink data channel frames are started at the transmission timings of the high-speed uplink control channel frames.

5. A mobile communication method, wherein transmission timings of uplink data channel frames for transmitting user data based on an EUL method are synchronized among mobile stations (10a, 10b, 10c) located in a single area;
***characterized in that***
uplink data channel frames are transmitted while synchronizing the transmission timings of the uplink data channel frames with transmission timings of high-speed uplink control channel frames for transmitting control data based on a downlink packet high-speed transmission method.

## Patentansprüche

1. Mobilstation (10a, 10b, 10c), umfassend:
einen Übertragungsabschnitt (14), der konfiguriert ist, Uplink-Datenkanalrahmen zu übertragen zum Übertragen von Benutzerdaten, basierend auf einem EUL-Verfahren, so dass Übertragungszeiten der Uplink-Datenkanalrahmen unter Mobilstationen synchronisiert sind, die sich in einem einzelnen Bereich befinden;
**dadurch gekennzeichnet, dass**
der Übertragungsabschnitt (14) konfiguriert ist, die Uplink-Datenkanalrahmen zu übertragen, mit einem Synchronisieren der Übertragungszeiten der Uplink-Datenkanalrahmen mit Übertragungszeiten von Hochgeschwindigkeits-Uplink-Steuerungskanalrahmen zum Übertragen von Steuerungsdaten, basierend auf einem Downlink-Paket-Hochgeschwindigkeits-Übertragungsverfahren.

2. Mobilstation nach Anspruch 1, wobei die Übertragungszeiten der Uplink-Datenkanalrahmen als Zeiten definiert sind, die von einer Downlink-Teilrahmenzeit um einen festen Offset verschoben sind.

3. Mobilkommunikationssystem, umfassend:
einen Steuerungsabschnitt (22), der konfiguriert ist, Mobilstationen (10a, 10b, 10c) zu steuern, die sich in einem einzelnen Bereich befinden, so dass Übertragungszeiten von Uplink-Datenkanalrahmen zum Übertragen von Benutzerdaten basierend auf einem EUL-Verfahren unter den Mobilstationen (10a, 10b, 10c) synchronisiert sind;
**dadurch gekennzeichnet, dass**
der Steuerungsabschnitt (22) konfiguriert ist, die Mobilstationen (10a, 10b, 10c) zu steuern, um die Uplink-Datenkanalrahmen mit einem Synchronisieren der Übertragungszeiten der Uplink-Datenkanalrahmen mit Übertragungszeiten von Hochgeschwindigkeits-Uplink-Steuerungskanalrahmen zum Übertragen von Steuerungsdaten zu übertragen, basierend auf einem Downlink-Paket-Hochgeschwindigkeits-Übertragungsverfahren.

4. Mobilkommunikationssystem nach Anspruch 3, wobei der Steuerungsabschnitt (22) konfiguriert ist, eine Uplink-Übertragungsrate zuzuteilen, die für die Übertragung der Benutzerdaten an die Mobilstation (10a, 10b, 10c) genutzt wird, so dass die Übertragung der Uplink-Datenkanalrahmen zu den Übertragungszeiten der Hochgeschwindigkeits-Uplink-Steuerungskanalrahmen begonnen wird.

5. Mobilkommunikationsverfahren, wobei Übertragungszeiten von Uplink-Datenkanalrahmen zum Übertragen von Benutzerdaten basierend auf einem EUL-Verfahren unter Mobilstationen (10a, 10b, 10c) synchronisiert werden, die sich in einem einzelnen Bereich befinden;
**dadurch gekennzeichnet, dass**
Uplink-Datenkanalrahmen übertragen werden, während die Übertragungszeiten der Uplink-Datenkanalrahmen mit Übertragungszeiten von Hochgeschwindigkeits-Uplink-Steuerungskanalrahmen synchronisiert werden, zum Übertragen von Steuerungsdaten, basierend auf einem Downlink-Paket-Hochgeschwindigkeits-Übertragungsverfahren.

## Revendications

1. Station mobile (10a, 10b, 10c), comprenant:
une section (14) d'émission configurée pour émettre des trames de canal de données en liaison montante pour émettre des données d'utilisateur sur la base d'un procédé EUL, de sorte que des temps d'émission des trames de canal de données en liaison montante soient synchronisés entre les stations mobiles situées dans une zone unique ;
**caractérisée en ce que**
la section (14) d'émission est configurée pour émettre les trames de canal de données en liaison montante, et synchroniser les temps d'émission des trames de canal de données en liaison montante avec des temps d'émission des trames de canal de signalisation en liaison montante haut débit pour émettre des données de commande sur la base sur d'un procédé d'émission haut débit de paquet en liaison descendante.

2. Station mobile selon la revendication 1, où les temps d'émission des trames de canal de données en liaison montante sont définis comme étant des temps décalés d'un minutage de trame de partage en liaison descendante par un décalage fixé.

3. Système de communication mobile, comprenant:
une section (22) de commande configurée pour commander des stations mobiles (10a, 10b, 10c) situées dans une zone unique, de sorte que les temps d'émission des trames de canal de données en liaison montante pour émettre des données d'utilisateur sur la base d'un procédé EUL sont synchronisés entre les stations mobiles (10a, 10b, 10c);
**caractérisée en ce que**
la section (22) de commande est configurée pour commander les stations mobiles (10a, 10b, 10c), afin d'émettre des trames de canal de données en liaison montante et synchroniser les temps d'émission des trames de canal de données en liaison montante avec des temps d'émission des trames de canal de signalisation en liaison montante haut débit pour émettre des données de commande sur la base d'un procédé d'émission haut débit de paquet en liaison descendante.

4. Système de communication mobile selon la revendication 3, dans lequel la section (22) de commande est configurée pour attribuer un débit d'émission en liaison montante utilisé pour l'émission des données d'utilisateur à la station mobile (10a, 10b, 10c), de sorte qu'une émission des trames de canal de données en liaison montante soient démarrée au temps d'émission des trames de canal de signalisation en liaison montante haut débit.

5. Procédé de communication mobile, où les temps d'émission des trames de canal de données en liaison montante pour émettre des données d'utilisateur sur la base d'un procédé EUL sont synchronisés entre des stations mobiles (10a, 10b, 10c) situées dans une zone unique ;
**caractérisé en ce que**
des trames de canal de données en liaison montante sont émis lors de la synchronisation des temps d'émission des trames de canal de données en liaison montante avec des temps d'émission de trames de canal de signalisation haut débit en liaison montante pour émettre des données de commande sur la base d'un procédé d'émission haut débit de paquet en liaison descendante.
